# EUROPEAN PATENT SPECIFICATION

(11) **EP 4 439 436 B1**
(45) Date of publication and mention of the grant of the patent: **12.11.2025**
(21) Application number: 23211950.3
(22) Date of filing: 24.11.2023
(51) Int. Cl.: G06Q 30/0251, G06Q 20/32, G06Q 20/20

(54) **PAYMENT ADVERTISEMENT SYSTEM AND METHOD FOR CARD PAYMENT APPLICATION**
ZAHLUNGSWERBUNGSSYSTEM UND VERFAHREN FÜR KARTENZAHLUNGSANWENDUNG
SYSTÈME ET PROCÉDÉ DE PUBLICITÉ DE PAIEMENT POUR APPLICATION DE PAIEMENT PAR CARTE

(30) Priority: 30.03.2023 KR 20230041819
(43) Date of publication of application: 02.10.2024
(73) Proprietor: Park, Hee Young, Seoul 04731 (KR)
(72) Inventor: Park, Hee Young, Seoul 04731 (KR)
(74) Representative: Grünecker Patent- und Rechtsanwälte PartG mbB

(56) References cited:
- WO-A1-2008/134299
- US-A1- 2018 032 997
- MAKSIM POPOV ANONYMOUS: "How the Skins for Payment Cards on Google Pay and Apple Pay can Help to Increase Customers' Payments", 6 January 2023 (2023-01-06), pages 1 - 10, XP093160447, Retrieved from the Internet <URL:https://www.finextra.com/blogposting/23513/how-the-skins-for-payment-cards-on-google-pay-and-apple-pay-can-help-to-increase-customers-payments> [retrieved on 20240508]

## Description

### BACKGROUND OF THE INVENTION

### Field of the Invention

The present disclosure relates to a payment advertisement system and a payment advertisement method for a card payment application. More particularly, the present disclosure relates to a payment advertisement system and a payment advertisement method for a card payment application, wherein an advertisement is directly created and published with an advertiser terminal, and when a payment transaction is completed using a card payment application on a payer terminal, the published advertisement is added to a payment receipt and output to a screen of the payer terminal, or wherein a digital card skin designed with an advertisement of an advertiser is selected and applied to a card linked to a card payment application using a payer terminal, and when a payment is conducted with the card, the advertisement is exposed to a screen of the payer terminal.

### Description of the Related Art

Currently, in a mobile payment transaction environment, the number of users and the frequency of use of fintech applications that assist or conduct payment transactions have increased because of payment convenience. Payment applications that assist card payment transactions to improve security and convenience have been introduced, and the utilization of the applications is expected to gradually increase.

The main function of the payment application is to conduct payment transactions. As receipts and cards have been changed from actual things to electronic forms that can be viewed on a screen of a digital device, a favorable environment has come for the payment application to also perform, as an advertisement medium, a function of placing advertisements on banners, notification windows, or electronic receipts to make profits and expose advertisements to application users.

According to the related art, an electronic receipt is issued to a payer terminal and an advertisement that an application provides is posted in the electronic receipt, or an advertisement is exposed on a home screen or standby screen of a mobile terminal and a benefit is given to a user of the terminal, but there is a problem that the form · composition · purpose · generation principle of the advertisement are not clearly presented and a high cost is required for an advertiser to create an advertisement.

The foregoing is intended merely to aid in the understanding of the background of the present disclosure, and is not intended to mean that the present disclosure falls within the purview of the related art that is already known to those skilled in the art.

### Documents of Related Art

(Patent Document 1) Korean Patent Application Publication No. 10-2021-0132387 "payment method using one-time payment security code based on color pixel code"; and
(Patent Document 2) Korean Patent No. 10-1583115 "MANAGEMENT SYSTEM AND MANAGEMENT METHOD OF ADVERTISEMENT APPLICATION".
US 2018/0032997 A1 relates to providing mobile device transactions. An indication is received that a mobile device has established communication with a point-of-sale terminal. Profile information associated with members of a service network are stored, as well as advertisement trigger information associated with advertisements of an advertiser. The representation of an advertisement is caused outside of the service network based on the profile information and the advertisement trigger information.

### SUMMARY

It is the object of the present invention to provide an improved payment advertisement system and method for a card payment application.
The object is achieved by the subject matter of the independent claims.
Embodiments are defined by the dependent claims.

The present disclosure is directed to providing a payment advertisement system and a payment advertisement method for a 25 card payment application, wherein an advertisement created and published with an advertiser terminal is added to a payment receipt and output to a screen of a payer terminal that has completed a payment transaction using a card payment application so as to obtain advertising effects with low cost, and wherein a digital card skin designed with an advertisement of an advertiser is selected and applied to a card linked to a card payment application using a payer terminal, and when a payment is conducted with the card, the advertisement is exposed to a screen of the payer terminal so as to reduce the burden of advertising.

According to an aspect of the present disclosure, there are provided a payment advertisement system and a payment advertisement method for a card payment application, wherein an advertisement created and published with an advertiser terminal is added to a payment receipt and output to a screen of a payer terminal that has completed a payment transaction using a card payment application.

In a first embodiment, a method of creating, with an advertiser terminal, an advertisement through an advertisement comprehensive application may include: downloading the advertisement comprehensive application from an advertisement management platform server; selecting either a receipt advertisement or a banner advertisement; inputting an image and voice to be used in the advertisement through an advertisement input part and storing the input advertisement through a storage part, in the advertisement comprehensive application; setting advertisement duration and exposure frequency through an advertisement control part and publishing the set advertisement and uploading the same to the advertisement management platform server.

In the first embodiment, the inputting of the advertisement image in the advertisement comprehensive application may include selecting a registered advertisement creator in an advertisement outsourcing input part of the advertisement comprehensive application and outsourcing the advertisement.

The advertisement voice generated in the advertisement comprehensive application may be used when the banner advertisement is created. A voice file prepared in advance may be uploaded and used, or an advertiser's natural voice may be recorded through a voice input part of the advertisement comprehensive application, or a voice sample included in the advertisement comprehensive application may be included in the payment advertisement system.

The voice input method has an expandable potential to be applied to a receipt advertisement later through a voice input part.

In the first embodiment, the advertisement image, advertisement video, advertisement voice, advertisement duration, and exposure frequency may be changed · managed at any time in the advertisement comprehensive application installed on the advertiser terminal.

In the first embodiment, in an advertisement output application, the payment advertisement method for the card payment application may include: conducting and completing a payment transaction with a card linked to a card payment application of a payer terminal and a point-of-sales (POS) device of a seller; outputting a payment receipt in which a transaction result is recorded to a screen of a payer terminal and a screen of the POS device; and adding an advertisement to the payment receipt and outputting the same.

In the first embodiment, the payment advertisement method for the card payment application may be equally applied to an online card payment, which is conducted via the Internet on a PC or mobile device, rather than a direct card payment, and may output the payment receipt and the receipt advertisement through the advertisement output application of the advertisement management platform server.

In the first embodiment, the payment advertisement method for the card payment application may have a follower sharing function of sharing the output receipt advertisement with followers of the payer.

According to another aspect of the present disclosure, provided are a payment advertisement system and a payment advertisement method for a card payment application, wherein a digital card skin designed with an advertisement of an advertiser is selected and applied to a card linked to a card payment application using a payer terminal, and when a payment is conducted with the card, the advertisement is exposed on a screen of the payer terminal.

In a second embodiment, the payment advertisement method for the card payment application may include: making, by an advertiser of a digital card skin, a request to an advertisement management platform server for the digital card skin; registering, in a card payment application by the advertisement management platform server, a card advertisement to be broadcasted in conjunction with the digital card skin of the advertiser; setting the registered digital card skin to a card linked to a card payment application of a payer terminal; conducting a payment with the card to which the card skin is set; and outputting the card advertisement composed of a video to a screen of the payer terminal.

In the second embodiment, the digital card skin and the card advertisement may be outsourced by the advertisement management platform server to be created at the request of the advertiser, and the digital card skin may be stored in the card payment application of a platform, and the card advertisement may be stored in the advertisement output application.

In the second embodiment, in the card payment application, the card advertisement of the digital card skin of the payment advertisement method may provide the payer terminal that has outputted the advertisement with a benefit, such as adding points, specified by the advertiser.

The payment advertisement system and the payment advertisement method for the card payment application according to the present disclosure simplifies advertisement creation, publishment, and management through the advertisement comprehensive application with an advertiser terminal. Therefore, it is cheap and convenient to create an advertisement, temporal and spatial limitations of advertisement creation and management are removed, and an advertisement is published in real time, thereby easily exposing an advertiser's advertisement.

In addition, according to the payment advertisement system and the payment advertisement method for the card payment application according to the present disclosure, an advertisement is further shared with a payer's followers for broader promotion through trusted relationships.

In addition, according to the payment advertisement system and the payment advertisement method for the card payment application according to the present disclosure, each time a payer terminal selects and applies a digital card skin and makes a payment with the card, the advertiser collects the payer's database and the payer obtains the benefit specified by the advertiser. Therefore, the payer's aversion to an advertisement exposed to the payer terminal is reduced, and the advertiser is capable of checking and secure a loyal member, thereby obtaining a profit connection and more effective advertising effects.

In addition, according to the payment advertisement system and the payment advertisement method for the card payment application according to the present disclosure, an advertiser's advertisement is always exposed through a home screen of a card application or a card list screen on which linked cards are checked in a payer terminal holding a card to which a digital card skin is applied, thereby raising expectation of additional effects of increases in familiarity and awareness.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a block diagram illustrating a configuration of a payment advertisement system for a card payment application according to the present disclosure, and a block diagram of a platform network;
FIG. 2 is an exemplary diagram illustrating an electronic receipt issued according to a payment advertisement method for a card payment application according to a first embodiment of the present disclosure, and an exemplary diagram illustrating a function of sharing a receipt advertisement;
FIG. 3 is a flowchart illustrating a receipt advertisement creation process of the payment advertisement method for the card payment application according to the first embodiment of the present disclosure;
FIG. 4 is a flowchart illustrating a process of publishing and managing a receipt advertisement created by the payment advertisement method for the card payment application according to the first embodiment of the present disclosure;
FIG. 5 is a flowchart illustrating a receipt advertisement output process of the payment advertisement method for the card payment application according to the first embodiment of the present disclosure;
FIG. 6 is a flowchart illustrating a banner advertisement voice input function of a payment advertisement method for a card payment application according to the present disclosure;
FIG. 7 is an exemplary diagram illustrating a card advertisement of a payment advertisement method for a card payment application according to a second embodiment of the present disclosure; and
FIG. 8 is a flowchart illustrating a card advertisement output process of the payment advertisement method for the card payment application according to the second embodiment of the present disclosure.

### DETAILED DESCRIPTION OF THE INVENTION

Hereinbelow, exemplary embodiments of the present disclosure will be described in detail with reference to the accompanying drawings such that the present disclosure can be easily embodied by those skilled in the art to which this present disclosure belongs. However, description of the present disclosure is merely embodiments for structural or functional description, so the scope of the present disclosure should not be construed to be limited to the embodiments described herein. In addition, identical or similar elements will be given the same reference numeral regardless of the reference signs of the drawings, and a redundant description thereof will be omitted.

The technical terms used in the present disclosure are merely used to describe particular embodiments, and are not intended to limit the technical ideas of the present disclosure. In addition, the technical terms used in the present disclosure are to be construed in the sense in which they are generally understood by those skilled in the art, unless otherwise specifically defined in the present disclosure, and are not to be construed in an overly inclusive sense, nor are they to be construed in an overly narrow sense. In addition, a technical term used in the present disclosure is an incorrect technical term that does not accurately express the technical idea of the present disclosure should be replaced by or understood by a technical term that is properly understood by those skilled in the art. In addition, the generic terms used in the present disclosure are to be construed as defined in the dictionary or in accordance with the context, and are not to be construed in an unduly narrowed sense. In addition, in describing the present disclosure, if it is decided that a detailed description of the known art related to the present disclosure makes the subject matter of the present disclosure unclear, the detailed description is omitted.

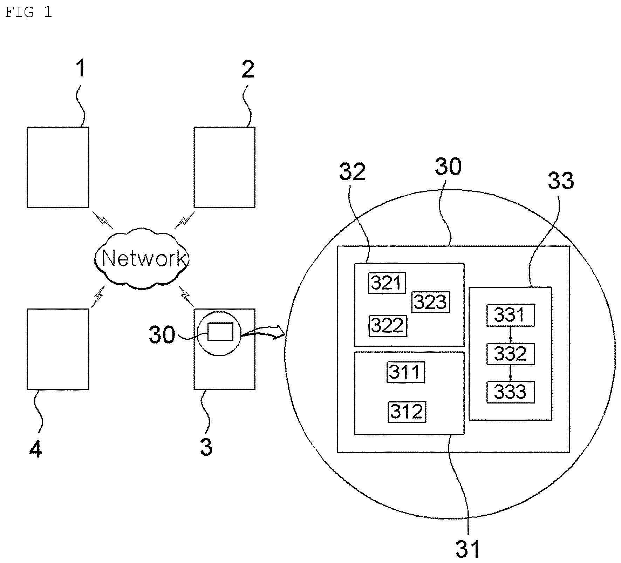

According to a first embodiment of the present disclosure, a payment advertisement system for a card payment application includes, as shown in FIG. 1,: a payer terminal 1 that intends to purchase an object online or offline by card; an advertiser terminal 2 that intends to advertise and sell an object offline or online and makes a card approval request; an advertisement management platform server 3 for recognizing, when approval for a payment is obtained from the advertiser terminal, the approval and outputting an advertisement to the payer terminal, and managing details of a digital card skin; and a bank/card company server 4 for determining whether to approve the card approval request from the advertiser terminal and notifying the advertiser terminal of an approval response.

The payer terminal has a card payment application 31 installed.

The advertiser terminal has a card payment application 31 and an advertisement comprehensive application 32 installed.

The advertiser terminal does not mean only an advertiser terminal, but may also be used in a broad sense including a terminal of a seller that wants to sell a product or a terminal of an affiliated store owner that wants to promote an affiliated store.

The bank/card company server 4 has a card payment application 31 installed that determines whether to approve the card approval request from the advertiser terminal and notifies the advertiser terminal of an approval response.

A platform 30 of the advertisement management platform server 3 connects the payer terminal 1, the advertiser terminal 2, and the bank/card company server 4 over a network as shown in FIG. 1. The platform 30 includes: a card payment application 31 for selecting and applying a digital card skin and conducting a card payment; an advertisement comprehensive application 32 for creating and publishing a receipt advertisement or a banner advertisement; and an advertisement output application 33 for recognizing payment approval when a payment transaction with the payer terminal is completed and outputting the receipt advertisement created by the advertisement comprehensive application.

The card payment application 31 includes: a communication part 311 for transmitting and receiving a card payment request and approval offline or over a network; and a skin check part 312 for checking a digital card skin registered by the advertisement management platform server 3.

The advertisement comprehensive application 32 includes: an advertisement input part 321 including an advertisement self-input part 321a for creating a receipt advertisement directly by an advertiser terminal, an advertisement outsourcing input part 321b for outsourcing a receipt advertisement to an outsourcing company, and a voice input part 321c for adding voice to a banner advertisement; an advertisement control part 322 for setting advertisement duration, advertisement broadcasting time, and advertisement exposure frequency and publishing the created and stored advertisement; and a storage part 323 for storing therein the created advertisement or materials related to advertisement creation.

The materials may include videos, images, texts, stickers, voice files, and designs used for an advertisement.

The advertisement self-input part 321a includes: an advertisement image part 3211 for inputting an image to be used in an advertisement; and an advertisement text part 3212 for inputting text and a sticker to be used in an advertisement. The advertisement outsourcing input part 321b includes a request part 3213 for inputting details that the advertisement creation outsourcing company refers to for advertisement creation.

The advertisement output application 33 includes: a card payment recognition part 331 for recognizing the completion of the card payment by the card payment application 31 when the payment is made; an advertisement attachment part 332 for receiving a signal transmitted from the card payment recognition part and attaching a receipt advertisement to a payment receipt in which a transaction result is recorded; and an advertisement output part 333 for outputting a transmitted payment receipt and advertisement.

The advertisement output application 33 is to output an advertisement before or after a receipt is generated when the payer completes a payment transaction with the card payment application 31. The form of the receipt is an electronic receipt output on the screen of the payer terminal by default.

The advertisement output of the advertisement output application 33 may be a receipt advertisement generated by the advertisement self-input part 321a of the advertisement comprehensive application 32, may be a receipt advertisement created by the advertisement outsourcing input part 321b outsourcing the advertisement to an external outsourcing company, or may be a card advertisement created at the request of an external advertiser and registered in the advertisement management platform server.

The advertisement comprehensive application includes a function of being linked to the card payment application, a function of storing an image or video, advertisement exposure frequency, and advertisement duration, a function of registering and posting advertisement creators and matching the advertisement creators with advertisers, and a social networking service (hereinafter, referred to as SNS) function for interaction with potential buyers.

The advertisement output application includes a card information storage function, and a function of being linked to a portable terminal, a central server, a POS device, a card company, the card payment application, the advertisement comprehensive application, and the SNS.

According to an aspect of the present disclosure, provided is a payment advertisement method for a card payment application, wherein an advertisement is simply created and published with only an image, text, and voice using an advertiser terminal through an advertisement comprehensive application, and an advertisement image and advertisement text on a receipt are output to a display screen of a payer terminal and a seller POS device screen through an advertisement output application.

In a first embodiment, a payment advertisement method for a card payment application includes: conducting and completing a payment transaction with a card linked to a card payment application of a payer terminal and a seller POS device; outputting a payment receipt in which a transaction result is recorded to a screen of the payer terminal and a screen of the seller POS device; and outputting a receipt advertisement added to the receipt.

In the first embodiment, the receipt advertisement method has a follower sharing function of sharing the output advertisement with followers of the payer terminal by clicking a follower sharing icon 120.

In the first embodiment, the receipt advertisement method may output a receipt advertisement before a receipt to further increase advertising effects.

In the first embodiment, the payment advertisement method for the card payment application is equally applicable to an online card payment, which is conducted via the Internet on a PC or mobile device, rather than a direct card payment, and may be performed by outputting a payment receipt and a receipt advertisement through an advertisement output application of an advertisement management platform server.

According to another aspect of the present disclosure, provided are a payment advertisement system and a payment advertisement method for a card payment application, wherein a digital card skin designed with an advertisement of an advertiser is selected and applied to a card linked to a card payment application using a payer terminal, and when a payment is conducted with the card, the advertisement is exposed on a screen of the payer terminal.

In a second embodiment, a payment advertisement method for a card payment application includes: making, by an advertiser of a digital card skin, a request to an advertisement management platform server for the digital card skin; registering, in a card payment application by the advertisement management platform server, the digital card skin and a card advertisement to be broadcasted in conjunction with the digital card skin; setting the registered digital card skin to a card linked to a card payment application of a payer terminal; conducting a payment with the card to which the digital card skin is set; and outputting the card advertisement composed of a video or image to a display screen of the payer terminal and a POS screen of the advertiser.

In the second embodiment, when a digital card skin of a desired affiliated store is set to a card linked to a card payment application of a payer terminal, a card advertisement composed of a video and an image about an advertiser of the digital card skin is stored in an advertisement output application of the advertisement management platform server, and the output of the advertisement is prepared each time the card to which the card skin is applied is used.

In the second embodiment, the external advertiser may provide the payer terminal that has outputted the card advertisement by applying the card skin, with a specified benefit such as reward points.

In the second embodiment, the payment advertisement method for the card payment application is equally applicable to an online card payment, which is conducted via the Internet on a PC or mobile device, rather than a direct card payment, and may be performed by outputting a card advertisement through an advertisement output application of an advertisement management platform server.

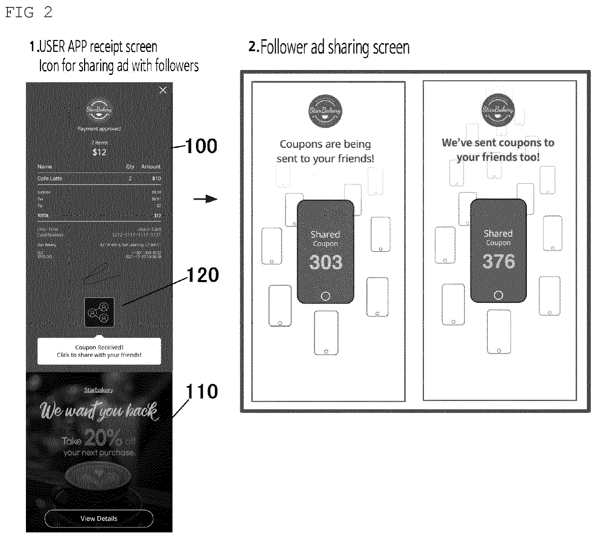

In the payment advertisement method for the card payment application according to the first embodiment of the present disclosure, a receipt advertisement 110 may be output at the bottom of an electronic receipt 100 output on a card payment application screen of the payer terminal as shown in FIG. 2, or may be output in another proper position.

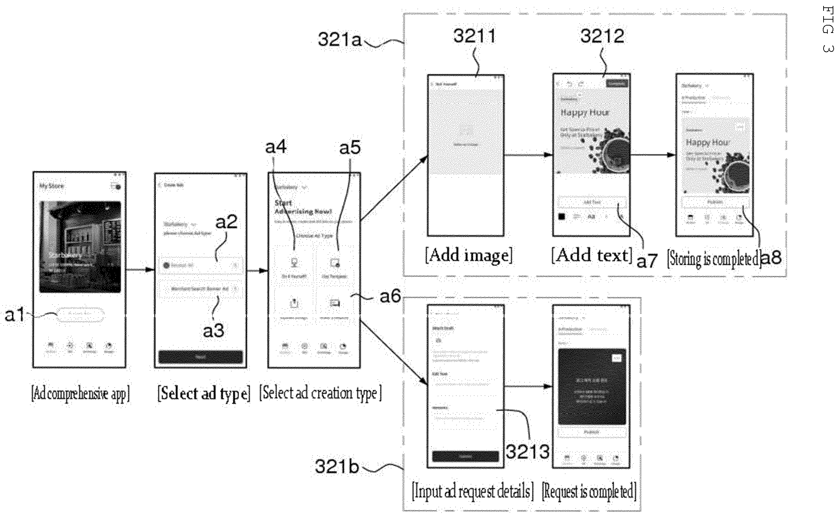

The advertisement comprehensive application 32 linked to the card payment application 31 creates an input advertisement, and the creation of the advertisement is performed as shown in FIG. 3. The advertiser terminal 2 requests the advertisement management platform server 3 to transmit the advertisement comprehensive application 32. Next, the advertiser terminal performs creation of an advertisement in the downloaded advertisement comprehensive application. A "Create Ads" button a1 on the home screen is pressed, and a receipt advertisement creation button a2 is pressed to select an advertisement self-input part 321a and an advertisement outsourcing input part 321b, and an advertisement image and text are input. Through an advertisement control part 322, the created advertisement is published and advertisement duration and exposure frequency are set.

In inputting an image and text to be used in an advertisement in the advertisement comprehensive application 32 downloaded from the advertisement management platform server 3, the advertisement may be input in two methods.

In the first method, an advertiser directly creates an advertisement through the advertisement self-input part 321a. The advertiser simply creates a receipt advertisement and a banner advertisement using an image, text, and voice to be used in the advertisement. In publishing the created receipt advertisement, the maximum amount of advertisement exposure per day and the duration of the advertisement are set, and the finally created receipt advertisement is composed of an image and text that the advertiser wants and is added to a payment receipt 100 and output with the advertisement duration and the exposure frequency set. A "Do it Yourself!" button a4 is pressed to enter the advertisement self-input part 321a and add an image through an advertisement image part 3211, and an "Add Text" button a7 is pressed to input text and a sticker through an advertisement text part 3212, as shown in the drawing. Alternatively, a template use button a5 is pressed to create an advertisement by utilizing a previously created advertisement image as a template.

In the second method, as a substitution, a registered advertisement creator is selected in a request part 3213 and an advertisement is outsourced through the advertisement outsourcing input part 321b. This is not the way that an advertiser directly creates an advertisement, but the way that an advertisement is outsourced to an advertisement creator registered in the advertisement comprehensive application. The advertisement creators are registered in advance. A "Make a Request" button a6 is pressed to enter the advertisement outsourcing input part 321b, and the registered advertisement creators are listed, and the advertiser provides a desired advertisement creator with details to be referred to for advertisement creation and outsources an advertisement. The selected advertisement creator creates an advertisement properly and uploads the advertisement to the advertisement comprehensive application. The progress of conducting advertisement creation may be checked also through the advertisement comprehensive application.

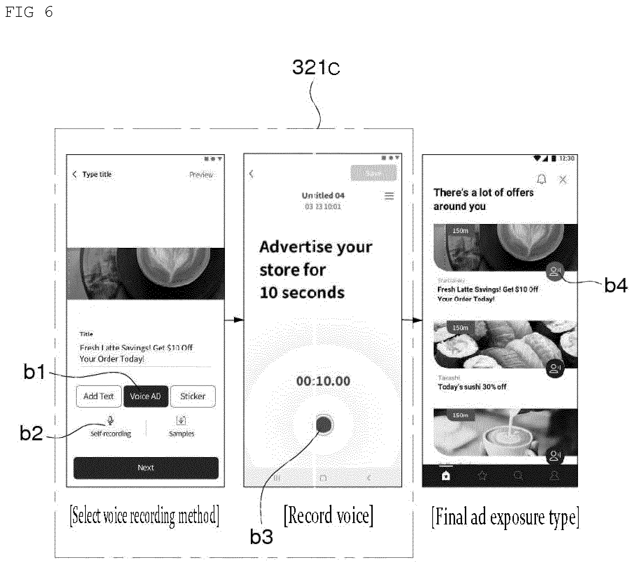

Regarding the advertisement creation, a banner advertisement including a voice advertisement may be created. Regarding the banner advertisement, as shown in FIGS. 3 and 6, advertisement voice is input through a voice input part 321c. The voice input part may include voice to the banner advertisement by inputting and uploading a prepared voice file, or by recording an advertiser's natural voice or using a TTS system or voiceware program to input an advertisement announcement, or by using a voice sample included in the advertisement comprehensive application.

How an advertiser record his or her voice is as follows. An image and text input process similar to receipt advertisement creation is performed through a banner advertisement creation button a3. When the advertiser presses a "Voice AD" tab b1 and a "Self-recording" button b2, a page saying that "Advertise your store for 10 seconds" is brought up. The advertiser presses a recording start button b3 to record a voice advertisement to be used for a banner advertisement. The advertisement voice is heard by pressing a voice icon b4 with a payer terminal.

The use of a voice advertisement has a sufficiently expandable potential to be applied to a banner advertisement as well as receipt advertisement creation.

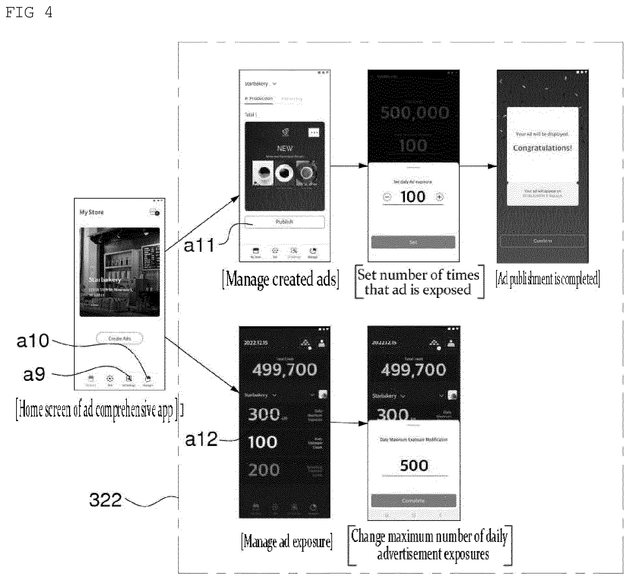

The advertiser may be either an advertisement client, or an affiliated store owner or advertisement client of any affiliated store. Through the advertisement control part 322 of the advertisement comprehensive application, as shown in FIG. 4, the created and stored advertisement is published and managed and settings including advertisement duration and exposure frequency may be changed as an advertiser wants.

To publish the receipt advertisement, an advertisement publishment page is entered through an "Ad Settings" tab a9, the created and stored receipt advertisement is selected, a publishment button all is pressed, the number of times that the advertisement is exposed is set, and the publishment is completed.

To manage the advertisement, an advertisement exposure management page for the published advertisement is entered through a "Manager" tab a10, and a button a12 for changing the maximum number of daily advertisement exposures is pressed to set a desired number of exposures.

The published receipt advertisement is uploaded to the advertisement management platform server and stored to be output as an advertisement after a payment is completed.

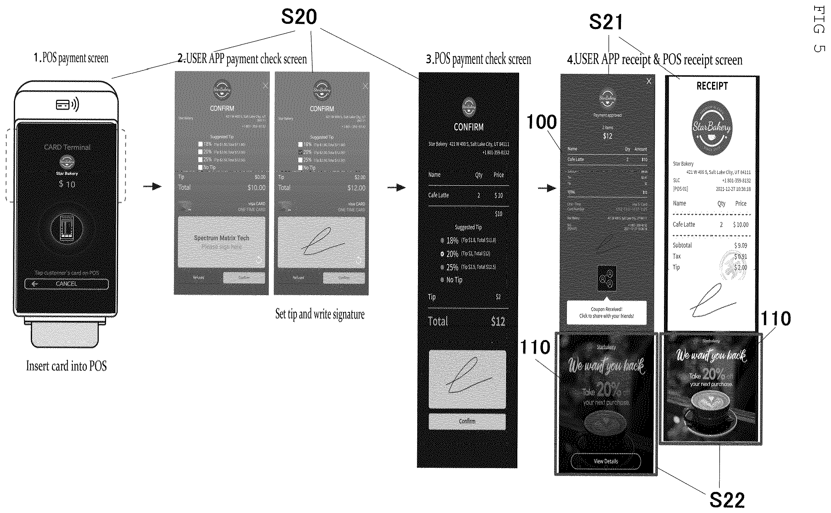

When a payment transaction is completed with a card payment application of a payer terminal, the receipt advertisement 110 published by the above method is included and output in the receipt 100 output on a screen of the card payment application. The method of outputting the receipt advertisement 110 is performed as shown in FIG. 5. The method includes: inserting a card linked to a card payment application of a payer terminal into a POS device of a seller in step S20; bring details of a payment transaction up on a screen of the payer terminal and writing a signature to conduct a payment in step S21; bring the signature up on a screen of the POS device of the seller to complete the payment in step S22; and outputting a payment receipt 100 in which a transaction result is recorded to a display screen of the card payment application and a display screen of the POS device of the seller and outputting a receipt advertisement to the payer terminal in step S23.

In the step S23 of outputting the payment receipt 100 in which the transaction result is recorded and the receipt advertisement 110 to the card payment application screen and the POS device screen, the receipt advertisement is output with the payment receipt, and the payer is able to view and recognize the advertisement. In the drawing, the receipt advertisement is positioned at the bottom of the receipt, but this is for illustrative purposes only and the position of a receipt advertisement is not necessarily the bottom of a receipt. Depending on an input method, a receipt advertisement may be output as static images and text, as well as dynamic images and video.

The receipt advertisement output method performed as described above may output a receipt advertisement before a receipt to further increase advertising effects. In addition, a receipt advertisement output offline on a POS device screen of a seller is subjected to screen sharing with a device having a larger display screen so that other customers can view the receipt advertisement, thereby obtaining additional advertising effects.

The payment advertisement method for the card payment application is equally applied to an online card payment, which is conducted via the Internet on a PC or mobile device, rather than a direct card payment, and may output a payment receipt and a receipt advertisement through the advertisement output application of the advertisement management platform server.

The payment receipt may include a sharing function which is to link the card payment application to an application including an SNS function to share a receipt advertisement with followers of the payer. As shown in FIG. 2, the follower sharing icon 120 in the receipt is pressed to execute the sharing function and the receipt advertisement is shared with the followers of the payer on the SNS linked in advance to the card payment application.

Herein, not the entire receipt, but only the receipt advertisement including an advertisement image and text is shared. To encourage this follower sharing, a predetermined reward may be provided to a person who has executed the follower sharing function.

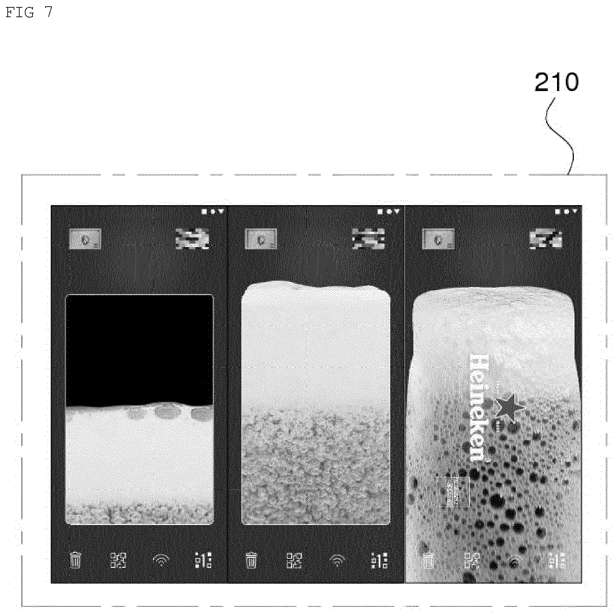

In the payment advertisement method for the card payment application according to the second embodiment of the present disclosure, a card advertisement 210 is output on a card payment application screen of a payer terminal, as shown in FIG. 7.

Regarding the card advertisement 210, a digital card skin and a card advertisement created at the request of an advertiser to the advertisement management platform server are stored in the advertisement management platform server, and when a payment is conducted with a card to which the digital card skin is applied is used, the advertisement output part 333 outputs the card advertisement 210 on the screen of the payer terminal.

The digital card skin and the card advertisement are created by the advertisement management platform server and uploaded to the card payment application at the request of the advertiser.

Referring to FIG. 7, regarding the card advertisement 210, when a payment is conducted with a card to which the digital card skin "Heineken" is applied within a range of near-field communication (NFC) in which electronic devices, such as smartphones, smartwatches, etc., are capable of short-range wireless communication with smart cards and other electronic devices, an advertisement video and voice of the affiliated store "Heineken" are output on the screen of the payer terminal.

In the second embodiment, a payment advertisement method for a card payment application includes: making, by an advertiser of a digital card skin, a request to an advertisement management platform server for the digital card skin; registering, in a card payment application by the advertisement management platform server, the digital card skin and a card advertisement to be broadcasted in conjunction with the digital card skin; setting the registered digital card skin to a card linked to a card payment application of a payer terminal; conducting a payment with the card to which the digital card skin is set; and outputting the card advertisement composed of an advertisement video or advertisement image to a screen of the payer terminal.

To set the digital card skin to the card linked to the card payment application, a payment card linked to a card application is selected through a card list screen, and a payer views digital card skins 200 of advertisers available for the card and selects and applies a digital card skin of a desired advertiser.

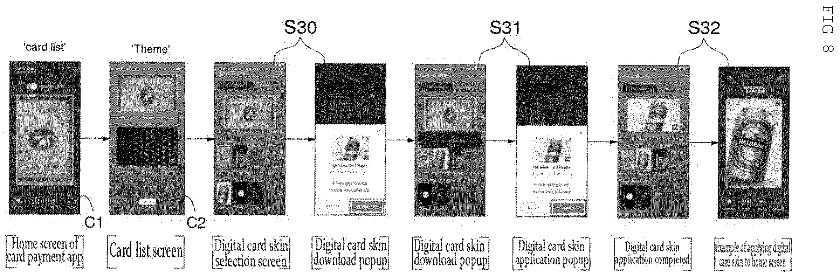

How to output the card advertisement 210 will be described in more detail with reference to FIG. 8. The card payment application is entered. The card list screen appears when a "Credit card" tab c1 at the bottom right of a home screen is pressed. A digital card skin setting screen appears when a "Theme" tab c2 at the bottom right of the card list screen is pressed. On the digital card skin setting screen, a card to which a digital card skin is to be applied is selected. Next, from a list of multiple digital card skins (Other Themes) downloadable from the advertisement management platform server, one digital card skin is selected and downloaded in step S30. The digital card skin that is already downloaded from the "Other Themes" to the card payment application and is relocated to a ready-to-use digital card skin list (My Themes) is applied to the card in step S31. The card to which the digital card skin is applied appears in the card list and the home screen in step S32. When a mobile payment is conducted with the card, the card advertisement 210 is exposed on the display screen of the payer terminal as shown in FIG. 7.

In the step of selecting and applying the digital card skin, as shown in FIG. 8, a pop-up window shows a benefit, which the advertiser provides, of using the digital card skin and viewing the card advertisement in addition to an existing card use benefit that a card company provides.

This process until step S32 is performed only at the beginning, and thereafter, when a mobile payment is conducted with the card in the card payment application, the card advertisement is exposed on the screen of the payer terminal.

When the card to which the digital card skin is applied is selected, the card payment application recognizes this. When the payment is conduct, the advertisement output part 333 of the advertisement output application 33 linked to the card payment application exposes the card advertisement 210 to the screen of the payer terminal.

The card to which the digital card skin is applied is always exposed on the payer terminal through the home screen of the card application or the card list screen on which linked cards are checked, thereby obtaining additional advertising effects.

The payment with the card to which the digital card skin is applied enables the linked card advertisement to be broadcasted and simultaneously the advertiser to collect the payer's database and check and secure loyal members.

After the payment, when the card advertisement composed of the advertisement video, image, and voice of the digital card skin is output to the screen of the payer terminal, the card advertisement 210 of the advertiser of the selected digital card skin utilizes the entire area of the payer terminal display screen to output a highly dynamic advertisement, unlike the receipt advertisement 110 or any other advertisements output on a smartphone.

As described above, a card advertisement is output after a payment is conducted with a card to which a digital card skin is applied. Herein, an advertiser of an affiliated store corresponding to the digital card skin may provide a payer who has viewed the card advertisement with a benefit, such as adding a pre-specified discount and points, in addition to an existing fixed benefit of using the card. For example, it may be set that when payment is conducted with a card on which a digital card skin of a particular cafe affiliated store is set and a card advertisement of the cafe affiliated store is viewed, reward points of the cafe affiliated store are accumulated or a discount benefit is given.

Obtaining a benefit of using another digital card skin with one card is achieved by simply performing the step of selecting and applying the digital card skin.

The payment advertisement system and the payment advertisement method for the card payment application configured as described above simplifies advertisement creation, publishment, and management through the advertisement comprehensive application with an advertiser terminal. Therefore, it is cheap and convenient to create an advertisement, temporal and spatial limitations of advertisement creation and management are removed, and an advertisement is published in real time, thereby easily exposing an advertiser's advertisement.

The payment advertisement system and the payment advertisement method for the card payment application configured as described above further shares an advertisement with a payer's followers for broader promotion through trusted relationships.

According to the payment advertisement system and the payment advertisement method for the card payment application configured as described above, each time a payer terminal selects and applies a digital card skin and makes a payment with the card, the advertiser collects the payer's database and the payer obtains the benefit specified by the advertiser. Therefore, the payer's aversion to an advertisement exposed to the payer terminal is reduced, and the advertiser is capable of checking and secure a loyal member, thereby obtaining a profit connection and more effective advertising effects.

According to the payment advertisement system and the payment advertisement method for the card payment application configured as described above, an advertiser's advertisement is always exposed through a home screen of a card application or a card list screen on which linked cards are checked in a payer terminal holding a card to which a digital card skin is applied, thereby raising expectation of additional effects of increases in familiarity and awareness.

The embodiments of the present disclosure are realized not only through the above-described apparatus and/or operation method, but also a program or a recording medium on which the program is recorded, the program for realizing the functions corresponding to the configurations of the embodiments of the present disclosure. Such realization can be easily made by a person skilled in the art to which the present disclosure pertains, from the above-described embodiments.

## Claims

1. A payment advertisement system for a card payment application, the payment advertisement system comprising:
a payer terminal (1) that intends to purchase an object online or offline by card;
an advertiser terminal (2) that intends to advertise and sell an object offline or online;
an advertisement management platform server (3) for recognizing, when approval for a payment is obtained from the advertiser terminal, the approval and outputting an advertisement to the payer terminal; and
a bank/card company server (4) for determining whether to approve a card approval request from the advertiser terminal and notifying the advertiser terminal of an approval response,
wherein a platform (30) of the advertisement management platform server (3) is configured to connect the payer terminal (1), the advertiser terminal (2), and the bank/card company server (4) over a network,
the platform (30) of the advertisement management platform server (3) comprises: a card payment application (31) for conducting a card payment; an advertisement comprehensive application (32) for creating and publishing an advertisement; and an advertisement output application (33) for recognizing payment approval when a payment transaction with the payer terminal is completed and outputting the advertisement created by the advertisement comprehensive application (32),
the card payment application (31) comprises: a communication part (311) for transmitting and receiving a card payment request and approval; and a skin check part (312) for checking a registered digital card skin,
the advertisement comprehensive application (32) comprises: an advertisement input part (321) comprising an advertisement self-input part (321a) for creating an advertisement directly, an advertisement outsourcing input part (321b) for outsourcing an advertisement to an outsourcing company, and a voice input part (321c) for adding voice to an advertisement; an advertisement control part (322) for setting advertisement duration, advertisement broadcasting time, and advertisement exposure frequency and publishing an advertisement; and a storage part (323) for storing the created advertisement or a tool related to advertisement creation, and
the advertisement output application (33) comprises: a card payment recognition part (331) for recognizing completion of the card payment by the card payment application (31) when the payment is made; an advertisement attachment part (332) for receiving a signal transmitted from the card payment recognition part and attaching an advertisement to a payment receipt; and an advertisement output part (333) for outputting a transmitted payment receipt and advertisement,
wherein the card payment application (31) further renders a screen to receive a signature for the payment transaction in response to detecting insertion of a card linked to the card payment application (31) into a POS device of an advertiser and a seller, and
wherein the advertisement output part (333) is configured for outputting the transmitted payment receipt and the advertisement to the payer terminal.

2. The payment advertisement system of claim 1, wherein the advertisement self-input part (321a) comprises: an advertisement image part (3211) for inputting an image to be used in an advertisement; and an advertisement text part (3212) for inputting text and a sticker to be used in an advertisement, and
the advertisement outsourcing input part (321b) comprises a request part (3213) for inputting details that the outsourcing company refers to for advertisement creation.

3. A payment advertisement method for a card payment application, the payment advertisement method comprising:
making, with an advertiser terminal, a request to an advertisement management platform server for an advertisement so that the advertisement is created using an advertisement comprehensive application;
providing, by the advertisement management platform server that has received the request for the advertisement, the advertisement comprehensive application to the advertiser terminal that has made the request;
creating the advertisement through an advertisement input part with the advertiser terminal in which the advertisement comprehensive application is installed, and storing the advertisement;
setting and inputting advertisement duration, advertisement broadcasting time, and advertisement exposure frequency for the created advertisement and publishing the created advertisement through an advertisement control part;
uploading the published advertisement to the advertisement management platform server;
inserting a card linked to a card payment application of a payer terminal into a POS device of an advertiser and a seller;
writing a signature on a screen of the card payment application for a payment;
completing the payment as the signature pops up on a screen of the POS device of the advertiser and the seller;
outputting an electronic receipt and the advertisement added thereto to the screen of the card payment application and the screen of the POS device of the advertiser and the seller.

4. The payment advertisement method of claim 3, wherein the advertiser terminal in which the advertisement comprehensive application is installed performs, instead of creating an advertisement through an advertisement self-input part of the advertisement comprehensive application, outsourcing an advertisement to an outsourcing company through an advertisement outsourcing input part, or creating an advertisement by utilizing a previously created advertisement image as a template.

5. The payment advertisement method of claim 3 or 4, wherein the payer terminal has a follower sharing function of sharing the advertisement output with the electronic receipt with followers of the payer terminal.

6. The payment advertisement method of claim 3 or 4, wherein in creating of an advertisement through an advertisement self-input part, an image including a dynamic image to be used in the advertisement is input through an advertisement image part and text and a sticker to be used in the advertisement are input through an advertisement text part, and
in creating of an advertisement through an advertisement outsourcing input part, an image and text that an outsourcing company refers to for advertisement creation are input through a request part.

7. The payment advertisement method of claim 3, wherein the creating of the advertisement is conducted by selecting either a receipt advertisement or a banner advertisement.

8. The payment advertisement method of claim 7, wherein the banner advertisement is created in the same manner as the receipt advertisement, and is created further with a voice advertisement function of recording the advertiser's natural voice or using a TTS system or voiceware to input an advertisement announcement or of using a voice sample registered in the advertisement comprehensive application, through a voice input part.

9. The payment advertisement method of claim 3, wherein the electronic receipt and a receipt advertisement are output to the payer terminal equally for an online card payment conducted via the Internet on a PC or mobile device and for a direct card payment through the POS device of the advertiser and the seller.

10. The payment advertisement method of claim 3, the payment advertisement method further comprising:
making, by the advertiser terminal, a request to the advertisement management platform server for a digital card skin, wherein the advertisement is a card advertisement to be broadcasted;
storing the digital card skin and the card advertisement created externally in the advertisement management platform server;
downloading the digital card skin from the advertisement management platform server to a card payment application of a payer terminal;
selecting and applying the digital card skin to the card linked to the card payment application through the card payment application; and
conducting a payment with the card to which the digital card skin is applied in the card payment application,
wherein outputting the transmitted payment receipt and the advertisement to the payer terminal comprises outputting the card advertisement composed of an advertiser's advertisement video, image, and voice of the digital card skin to the screen of the payer terminal through the advertisement output application.

11. The payment advertisement method of claim 10, wherein the advertiser provides the payer terminal that has outputted the card advertisement with the digital card skin applied with a benefit of using the card to which the digital card skin is applied, in addition to an existing fixed benefit of using the card.

12. The payment advertisement method of claim 10, wherein the digital card skin is simply variable on one card linked to a card application of the payer terminal.

## Patentansprüche

1. Ein Zahlungswerbesystem für eine Kartenzahlungsanwendung, wobei das Zahlungswerbesystem aufweist:
ein Zahler-Terminal (1) das beabsichtigt, ein Objekt online oder offline per Karte zu kaufen;
ein Inserenten-Terminal (2) das ein Objekt offline oder online bewerben und verkaufen will;
einen Anzeigenverwaltungsplattformserver (3) zum Erkennen, wenn die Genehmigung für eine Zahlung von dem Inserenten-Terminal eingeholt wird, der Genehmigung und zum Ausgeben einer Werbung an das Zahler-Terminal; und
einen Bank-/Kartenunternehmensserver (4) zum Bestimmen, ob eine Kartengenehmigungsanforderung von dem Inserenten-Terminal zu genehmigen ist, und zum Benachrichtigen des Inserenten-Terminals über eine Genehmigungsantwort,
wobei eine Plattform (30) des Anzeigenverwaltungsplattformservers (3) so konfiguriert ist, dass sie das Zahler-Terminal (1), das Inserenten-Terminal (2) und den Bank-/Kartenunternehmensserver (4) über ein Netzwerk verbindet,
die Plattform (30) des Anzeigenverwaltungsplattformservers (3) aufweist: eine Kartenzahlungsanwendung (31) zum Durchführen einer Kartenzahlung; eine Werbeausgabeanwendung (32) zum Erstellen und Veröffentlichen einer Werbung; und eine Werbeausgabeanwendung (33) zum Erkennen einer Zahlungsgenehmigung, wenn eine Zahlungstransaktion mit dem Zahler-Terminal abgeschlossen ist, und zum Ausgeben der von der Werbeausgabeanwendung (32) erstellten Werbung,
die Kartenzahlungsanwendung (31) aufweist: einen Kommunikationsteil (311) zum Übertragen und Empfangen einer Kartenzahlungsanforderung und -genehmigung; und einen Hautprüfungsteil (312) zum Prüfen einer registrierten digitalen Kartenhaut,
die Werbeausgabeanwendung (32) aufweist: eine Werbeeingabeeinheit (321), die eine Werbeeigeneingabeeinheit (321a) zum direkten Erstellen einer Werbung, eine Werbeauslagerungseingabeeinheit (321b) zum Auslagern einer Werbung an ein Auslagerungsunternehmen und eine Spracheingabeeinheit (321c) zum Hinzufügen von Sprache zu einer Werbung aufweist; eine Werbesteuereinheit (322) zum Einstellen der Werbedauer, der Werbesendezeit und der Werbeexpositionshäufigkeit und zum Veröffentlichen einer Werbung; und eine Speichereinheit (323) zum Speichern der erstellten Werbung oder eines Werkzeugs, das sich auf die Werbeerstellung bezieht, und
die Werbeausgabeanwendung (33) aufweist: einen Kartenzahlungserkennungsabschnitt (331) zum Erkennen des Abschlusses der Kartenzahlung durch die Kartenzahlungsanwendung (31), wenn die Zahlung gefertigt wird; einen Werbeanbringungsabschnitt (332) zum Empfangen eines von dem Kartenzahlungserkennungsabschnitt übertragenen Signals und zum Anbringen einer Werbung an einem Zahlungsbeleg; und einen Werbeausgabeteil (333) zum Ausgeben eines übertragenen Zahlungsbelegs und einer Werbung,
wobei die Kartenzahlungsanwendung (31) weiter einen Bildschirm ausgibt, um eine Unterschrift für die Zahlungstransaktion als Reaktion auf das Erkennen des Einsetzens einer mit der Kartenzahlungsanwendung (31) verbundenen Karte in eine POS-Vorrichtung eines Werbetreibenden und eines Verkäufers zu empfangen, und
wobei der Werbeausgabeteil (333) zum Ausgeben des übertragenen Zahlungsbelegs und der Werbung an den Zahler-Terminal konfiguriert ist.

2. Das Zahlungswerbesystem nach Anspruch 1, wobei die Werbeeigeneingabeeinheit (321a) aufweist: ein Werbungs-Bild-Teil (3211) zum Eingeben eines Bildes, das in einer Werbung verwendet werden soll; und ein Werbungs-Text-Teil (3212) zum Eingeben von Text und einem Knüppel, der in einer Werbung verwendet werden soll, und
der Werbeauslagerungseingabeeinheit (321b) weist einen Anfrageteil (3213) zum Eingeben von Details auf, auf die sich das Outsourcing-Unternehmen bei der Anzeigenerstellung bezieht.

3. Ein Zahlungwerbungsverfahren für eine Kartenzahlungsanwendung, wobei das Verfahren zur Zahlungwerbungsverfahren aufweist:
Durchführen einer Anfrage an einen Anzeigenverwaltungsplattformserver für eine Werbung mit einem Anschluss eines Werbetreibenden, so dass die Werbung unter Verwendung einer umfassenden Werbungsanwendung erstellt wird;
Bereitstellen der umfassenden Werbeanwendung durch den Anzeigenverwaltungsplattformserver, der die Anforderung für die Werbung empfangen hat, für den Anschluss des Werbenden, der die Anforderung gefertigt hat;
Erstellen der Werbung durch einen Werbeeingabeteil mit dem Anschluss des Werbetreibenden, in dem die werbeübergreifende Anwendung installiert ist, und Speichern der Werbung;
Einstellen und Eingeben der Anzeigedauer, der Anzeigensendezeit und der Anzeigenexpositionshäufigkeit für die erstellte Anzeige und Veröffentlichen der erstellten Anzeige durch einen Anzeigensteuerteil;
Hochladen der veröffentlichten Anzeige auf den Anzeigenverwaltungsplattformserver;
Einsetzen einer Karte, die mit einer Kartenzahlungsanwendung eines Anschlusses eines Zahlers verbunden ist, in eine POS-Vorrichtung eines Inserenten und eines Verkäufers;
Schreiben einer Unterschrift auf einem Bildschirm der Kartenzahlungsanwendung für eine Zahlung;
Abschluss der Zahlung, wenn die Unterschrift auf einem Bildschirm der Vorrichtung des Inserenten und des Verkäufers erscheint;
Ausgabe einer elektronischen Quittung und der ihr beigefügten Werbung auf dem Bildschirm der Kartenzahlungsanwendung und dem Bildschirm der POS-Vorrichtung des Inserenten und des Verkäufers.

4. Das Zahlungwerbungsverfahren nach Anspruch 3, wobei das Inserenten-Terminal in dem die umfassende Anwendung zur Werbung installiert ist, anstelle des Erstellens einer Werbung durch einen Selbst-Eingabe-Teil der umfassenden Anwendung zur Werbung das Auslagern einer Werbung an ein Outsourcing-Unternehmen durch einen Outsourcing-Eingabe-Teil zur Werbung oder das Erstellen einer Werbung durch Verwendung eines zuvor erstellten Werbebildes als Vorlage durchführt.

5. Das Zahlungwerbungsverfahren nach Anspruch 3 oder 4, wobei das Zahler-Terminal eine Funktion zur gemeinsamen Nutzung der Werbeausgabe mit der elektronischen Quittung mit den Anhängern des Zahler-Terminals hat.

6. Das Zahlungwerbungsverfahren nach Anspruch 3 oder 4, wobei bei der Erstellung einer Werbung durch einen Anzeigenselbsteingabeteil ein Bild einschließlich eines dynamischen Bildes, das in der Anzeige verwendet werden soll, durch einen Anzeigenbildteil eingegeben wird und Text und ein Sticker, der in der Anzeige verwendet werden soll, durch einen Anzeigentextteil eingegeben werden, und
bei der Erstellung einer Werbung durch einen Werbungs-Outsourcing-Eingabeteil werden ein Bild und ein Text, auf die sich ein Outsourcing-Unternehmen für die Anzeigenerstellung bezieht, durch einen Anfrageteil eingegeben.

7. Das Zahlungwerbungsverfahren nach Anspruch 3, wobei die Erstellung der Werbung durch Auswahl entweder einer Beleganzeige oder einer Banneranzeige erfolgt.

8. Das Zahlungwerbungsverfahren nach Anspruch 7, wobei die Bannerwerbung in der gleichen Weise wie die Quittungswerbung erstellt wird und weiter mit einer Sprachwerbungsfunktion erstellt wird, bei der die natürliche Stimme des Werbenden aufgezeichnet wird oder ein TTS-System oder eine Sprachsoftware verwendet wird, um eine Werbeankündigung einzugeben, oder bei der eine in der werbeübergreifenden Anwendung registrierte Sprachprobe durch einen Spracheingabeabschnitt verwendet wird.

9. Das Zahlungwerbungsverfahren nach Anspruch 3, bei dem die elektronische Quittung und eine Quittungsanzeige gleichermaßen für eine Online-Kartenzahlung, die über das Internet auf einem PC oder einer mobilen Vorrichtung durchgeführt wird, und für eine direkte Kartenzahlung über die POS-Vorrichtung des Werbenden und des Verkäufers an das Terminal des Zahlenden ausgegeben werden.

10. Das Zahlungwerbungsverfahren nach Anspruch 3, wobei das Verfahren zur Zahlungwerbungsverfahren weiterhin aufweist:
Durchführen einer Anfrage an den Anzeigenverwaltungsplattformserver durch den Anschluss des Werbetreibenden nach einer digitalen Kartenhülle, wobei die Werbung eine zu sendende Kartenwerbung ist;
Speichern des digitalen Karten-Skins und der extern erstellten Kartenwerbung in dem Anzeigenverwaltungsplattformserver;
Herunterladen des digitalen Karten-Skins vom Anzeigenverwaltungsplattformserver auf eine Kartenzahlungsanwendung eines Anschlusses eines Zahlers;
Auswählen und Aufbringen des digitalen Karten-Skins auf die mit der Kartenzahlungsanwendung verbundene Karte durch die Kartenzahlungsanwendung; und
Durchführen einer Zahlung mit der Karte, auf die das digitale Karten-Skin in der Kartenzahlungsanwendung aufgebracht ist,
wobei das Ausgeben des übertragenen Zahlungsbelegs und der Werbung an das Zahler-Terminal das Ausgeben der Kartenwerbung beinhaltet, die aus einem Werbevideo, einem Bild und einer Stimme des digitalen Kartenmantels besteht, an den Bildschirm des Zahler-Terminals durch die Werbeausgabeanwendung.

11. Das Zahlungwerbungsverfahren nach Anspruch 10, bei dem der Werbende dem Zahler-Terminal, das die Kartenwerbung mit dem aufgetragenen digitalen Karten-Skin ausgegeben hat, zusätzlich zu einem bestehenden festen Vorteil zur Verwendung der Karte, auf der der digitale Karten-Skin aufgetragen ist, einen Vorteil gewährt.

12. Das Zahlungwerbungsverfahren nach Anspruch 10, bei dem das digitale Kartenbild auf einer Karte, die mit einer Kartenanwendung des Zahler-Terminals verbunden ist, einfach variabel ist.

## Revendications

1. Système de publicité de paiement pour une application de paiement par carte, le système de publicité de paiement comprenant :
un terminal de payeur (1) qui a l'intention d'acheter un objet en ligne ou hors ligne par carte ;
un terminal d'annonceur (2) qui a l'intention de faire de la publicité et de vendre un objet hors ligne ou en ligne ;
un serveur de plateforme de gestion publicitaire (3) pour reconnaître, lorsque l'approbation d'un paiement est obtenue du terminal de l'annonceur, l'approbation et l'émission d'une publicité vers le terminal de paiement ; et
un serveur de banque/société de cartes (4) pour déterminer s'il faut approuver une demande d'approbation de carte émanant du terminal de l'annonceur et notifier au terminal de l'annonceur une réponse d'approbation,
dans lequel une plateforme (30) du serveur de plateforme de gestion publicitaire (3) est configurée pour connecter le terminal de payeur (1), le terminal d'annonceur (2) et le serveur de banque/société de cartes (4) sur un réseau,
la plateforme (30) du serveur de plateforme de gestion publicitaire (3) comprend : une application de paiement par carte (31) pour effectuer un paiement par carte ; une application complète de publicité (32) pour créer et publier une publicité ; et une application de sortie de publicité (33) pour reconnaître l'approbation du paiement lorsqu'une transaction de paiement avec le terminal de paiement est terminée et sortir la publicité créée par l'application complète de publicité (32),
l'application de paiement par carte (31) comprend : une partie de communication (311) pour transmettre et recevoir une demande et une approbation de paiement par carte ; et une partie de vérification d'habillage (312) pour vérifier un habillage de carte numérique enregistrée,
l'application complète de publicité (32) comprend : une partie d'entrée de publicité (321) comprenant une partie d'auto-entrée de publicité (321a) pour créer une publicité directement, une partie d'entrée d'externalisation de publicité (321b) pour externaliser une publicité à une société d'externalisation, et une partie d'entrée vocale (321c) pour ajouter une voix à une publicité ; une partie de commande de publicité (322) pour définir la durée de la publicité, l'heure de diffusion de la publicité, et la fréquence d'exposition de la publicité et publier une publicité ; et une partie de stockage (323) pour stocker la publicité créée ou un outil lié à la création de la publicité, et
l'application de sortie de publicité (33) comprend : une partie de reconnaissance de paiement par carte (331) pour reconnaître l'achèvement du paiement par carte par l'application de paiement par carte (31) lorsque le paiement est effectué ; une partie d'attachement de publicité (332) pour recevoir un signal transmis par la partie de reconnaissance de paiement par carte et attacher une publicité à un reçu de paiement ; et une partie de sortie de publicité (333) pour sortir un reçu de paiement et une publicité transmis,
dans lequel l'application de paiement par carte (31) rend en outre un écran pour recevoir une signature pour la transaction de paiement en réponse à la détection de l'insertion d'une carte liée à l'application de paiement par carte (31) dans un dispositif de point de vente d'un annonceur et d'un vendeur, et
dans lequel la partie de sortie de publicité (333) est configurée pour sortir le reçu de paiement transmis et la publicité vers le terminal de paiement.

2. Système de publicité de paiement selon la revendication 1, dans lequel la partie d'auto-entrée de publicité (321a) comprend : une partie d'image publicitaire (3211) pour entrer une image à utiliser dans une publicité ; et une partie de texte publicitaire (3212) pour entrer un texte et un autocollant à utiliser dans une publicité, et
la partie d'entrée d'externalisation de publicité (321b) comprend une partie de demande (3213) pour saisir les détails auxquels la société d'externalisation se réfère pour la création de la publicité.

3. Procédé de publicité de paiement pour une application de paiement par carte, le procédé de publicité de paiement comprenant les étapes consistant à :
envoyer, par un terminal d'annonceur, une demande d'annonce à un serveur de plateforme de gestion d'annonces afin que l'annonce soit créée en utilisant une application complète d'annonces ;
fournir, par le serveur de plateforme de gestion d'annonces qui a reçu la demande d'annonce, l'application complète d'annonces au terminal de l'annonceur qui a fait la demande ;
créer la publicité par l'intermédiaire d'une partie d'entrée de la publicité avec le terminal de l'annonceur dans lequel l'application complète de publicité est installée, et stocker la publicité ;
définir et saisir la durée de la publicité, l'heure de diffusion de la publicité et la fréquence d'exposition de la publicité pour la publicité créée, et publier la publicité créée par l'intermédiaire d'une partie de commande de la publicité ;
télécharger la publicité publiée vers le serveur de la plateforme de gestion de la publicité ;
insérer une carte liée à une application de paiement par carte d'un terminal de paiement dans un dispositif de point de vente d'un annonceur et d'un vendeur ;
écrire une signature sur un écran de l'application de paiement par carte pour un paiement ;
effectuer le paiement lorsque la signature apparaît sur l'écran du terminal de point de vente de l'annonceur et du vendeur ;
émettre un reçu électronique et la publicité qui y est ajoutée sur l'écran de l'application de paiement par carte et sur l'écran du dispositif de point de vente de l'annonceur et du vendeur.

4. Procédé de publicité de paiement selon la revendication 3, dans lequel le terminal de l'annonceur dans lequel l'application complète de publicité est installée effectue, au lieu de créer une publicité par l'intermédiaire d'une partie d'auto-entrée de publicité de l'application complète de publicité, l'externalisation d'une publicité à une société d'externalisation par l'intermédiaire d'une partie d'entrée d'externalisation de publicité, ou la création d'une publicité en utilisant une image de publicité précédemment créée comme un modèle.

5. Procédé de publicité de paiement selon la revendication 3 ou 4, dans lequel le terminal de paiement a une fonction de partage de la publicité avec le reçu électronique avec les personnes qui suivent le terminal de paiement.

6. Procédé de publicité de paiement selon la revendication 3 ou 4, dans lequel, lors de la création d'une publicité par l'intermédiaire d'une partie d'auto-entrée de publicité, une image incluant une image dynamique à utiliser dans la publicité est entrée par l'intermédiaire d'une partie d'image de la publicité et un texte et un autocollant à utiliser dans la publicité sont entrés par l'intermédiaire d'une partie de texte de la publicité, et
lors de la création d'une publicité par l'intermédiaire d'une partie d'entrée d'externalisation de publicité, une image et un texte auxquels une société d'externalisation se réfère pour la création de la publicité sont entrés par l'intermédiaire d'une partie de demande.

7. Procédé de publicité de paiement selon la revendication 3, dans lequel la création de la publicité est effectuée en sélectionnant soit une publicité de reçu, soit une bannière publicitaire.

8. Procédé de publicité de paiement selon la revendication 7, dans lequel la bannière publicitaire est créée de la même manière que le reçu publicitaire, et est créée en outre avec une fonction de publicité vocale permettant d'enregistrer la voix naturelle de l'annonceur ou d'utiliser un système TTS ou un logiciel vocal pour saisir une annonce publicitaire ou d'utiliser un échantillon vocal enregistré dans l'application complète de publicité, par l'intermédiaire d'une partie de saisie vocale.

9. Procédé de publicité de paiement selon la revendication 3, dans lequel le reçu électronique et une annonce de reçu sont émis vers le terminal de paiement également pour un paiement par carte en ligne effectué *via* internet sur un pc ou un dispositif mobile et pour un paiement direct par carte *via* le dispositif de point de vente de l'annonceur et du vendeur.

10. Procédé de publicité de paiement selon la revendication 3, le procédé de publicité de paiement comprenant outre les étapes consistant à :
effectuer, par le terminal de l'annonceur, une demande au serveur de la plateforme de gestion d'annonces pour un habillage de carte numérique, dans lequel l'annonce est une annonce de carte à diffuser ;
stocker l'habillage de carte numérique et l'annonce de carte créée en externe dans le serveur de plateforme de gestion d'annonces ;
télécharger l'habillage de carte numérique depuis le serveur de la plateforme de gestion publicitaire vers une application de paiement par carte d'un terminal de paiement ;
sélectionner et appliquer l'habillage de carte numérique à la carte liée à l'application de paiement par carte par l'intermédiaire de l'application de paiement par carte ; et
effectuer un paiement avec la carte à laquelle l'habillage de carte numérique est appliqué dans l'application de paiement par carte,
dans lequel la sortie du reçu de paiement transmis et de la publicité vers le terminal de paiement comprend la sortie de la publicité de carte composée d'une vidéo publicitaire, d'une image et d'une voix de l'habillage de carte numérique sur l'écran du terminal de paiement par l'intermédiaire de l'application de sortie de publicité.

11. Procédé de publicité de paiement selon la revendication 10, dans lequel l'annonceur fournit au terminal de paiement qui a émis la publicité de carte avec l'habillage de carte numérique appliqué un avantage lié à l'utilisation de la carte sur laquelle l'habillage de carte numérique est appliqué, en plus d'un avantage fixe existant lié à l'utilisation de la carte.

12. Procédé de publicité de paiement selon la revendication 10, dans lequel l'habillage de carte numérique est simplement variable sur une carte liée à une application de carte du terminal de paiement.
